Europäisches Patentamt

(19) European Patent Office

Office européen des brevets

(11) Publication number: **0 019 024**
**B1**

(12) **EUROPEAN PATENT SPECIFICATION**

(45) Date of publication of patent specification: **13.04.83**

(51) Int. Cl.³: **E 05 C 15/02, B 60 J 9/02**

(21) Application number: **79303043.8**

(22) Date of filing: **24.12.79**

(54) Ventilator-panels and windows for vehicles.

(30) Priority: **17.05.79 GB 7917147**

(43) Date of publication of application:
**26.11.80 Bulletin 80/24**

(45) Publication of the grant of the patent:
**13.04.83 Bulletin 83/15**

(84) Designated Contracting States:
**DE FR GB**

(56) References cited:
**FR - A - 2 341 726**
**GB - A - 1 100 621**
**US - A - 3 338 609**

(73) Proprietor: **BRITAX WEATHERSHIELDS LIMITED**
**151 Bishop Street**
**Birmingham B5 7EH (GB)**

(72) Inventor: **Fisher, Sidney Edward**
**645 Fox Hollies Road**
**Hall Green Birmingham, B28 9DW (GB)**

(74) Representative: **Hollinghurst, Antony**
**Britax Central Services 40 Granby Avenue**
**Garretts Green Birmingham, B33 OSJ (GB)**

Courier Press, Leamington Spa, England.

Ventilator-panels and windows for vehicles

This invention relates to ventilator panels and windows for vehicles of the kind in which a panel is adapted to close and uncover an opening bounded by a frame, the panel being detachably connected to the frame by manually releasable means to facilitate uncovering of the opening in an emergency.

United Kingdom Patent Specification No. 1,100,621 disclosed a ventilator of the foregoing type in which the panel is mounted on plates located parallel to and abutting the inside faces of the frame. The plates have formations which engage with corresponding formations on the frame so as to prevent movement of the plates except outwards in a direction perpendicular to the plane of the panel. A respective lever, mounted on the frame, can be moved into engagement with a slot in the corresponding plate, to prevent such outward movement, each lever is mounted on a respective shaft which is secured to the frame, the lever being held captive on the shaft by withdrawable means such as a cotter pin. The engagement between the levers and the slots in the plates is not such as to prevent separation in a direction perpendicular to the plane of each plate. Consequently, the plates and formations thereon must have a specific orientation with respect to the direction of removal of the panel.

According to the invention, in a ventilator or window for a vehicle comprising a panel, a frame bounding an opening in the vehicle and manually releasable means for detachably connecting the panel to the frame, respective support means on each side of the frame for supporting the panel on the frame in a closed position and in at least one opened position, each support means including a headed stud adapted to project through respective mutually aligned holes in confronting members associated with the panel and the frame, each stud having a pin projecting through a transverse hole in the stud on the opposite side of the panel and the frame from the head so as to prevent withdrawal of the stud, and a flexible inextensible member causes the pin to be withdrawn from the stud; one of the confronting members is fast with the panel and the other confronting member comprises part of the support means, the stud and the pin forming a rigid connection between the panel and the member, and the longitudinal axis of the studs being substantially parallel with the direction in which the panel is movable away from the frame when the pins are withdrawn.

The invention is particularly applicable to ventilators or windows of the kind in which the panel is supported by opposed pairs of angularly movable arm assemblies and the ventilator or window can be opened at either or both sides or ends to bring the panel into oppositely inclined positions or into a position parallel to and spaced from a closed position.

In such a construction a releasable pin may be incorporated in each arm assembly with the four pins being adapted to be withdrawn simultaneously by a common flexible inextensible member.

In a modification only one arm assembly of each pair incorporates a stud and pin with both pins being adapted to be withdrawn simultaneously by a common flexible inextensible member, the other arm assembly of each pair having interengaging co-operating parts which are releasable automatically upon withdrawal of the pin from the said one arm assembly of that pair.

In each construction the flexible inextensible member is trained around the interior of the panel and is withdrawn by means of a manual release member connected to the inextensible member at an intermediate point in its length.

The manual release member is accessible either from the interior or exterior of the window or ventilator. Preferably, however, two release members are provided mounted, respectively, on the inside and the outside of the panel and connected at their inner ends to the inextensible member. The panel can then be released from the interior and from the exterior of the vehicle.

Two embodiments of our invention are illustrated in the accompanying drawings in which:—

Figure 1 is an inverted plan of a panel for a ventilator and window of a vehicle showing the layout of a panel release mechanism;

Figure 2 is a section on the line 2—2 of Figure 1;

Figure 3 is a section on the line 3—3 of Figure 1;

Figure 4 is a section on the line 4—4 of Figure 1;

Figure 5 is a plan substantially of one half of a panel release mechanism; and

Figure 6 is a section on the line 6—6 of Figure 5.

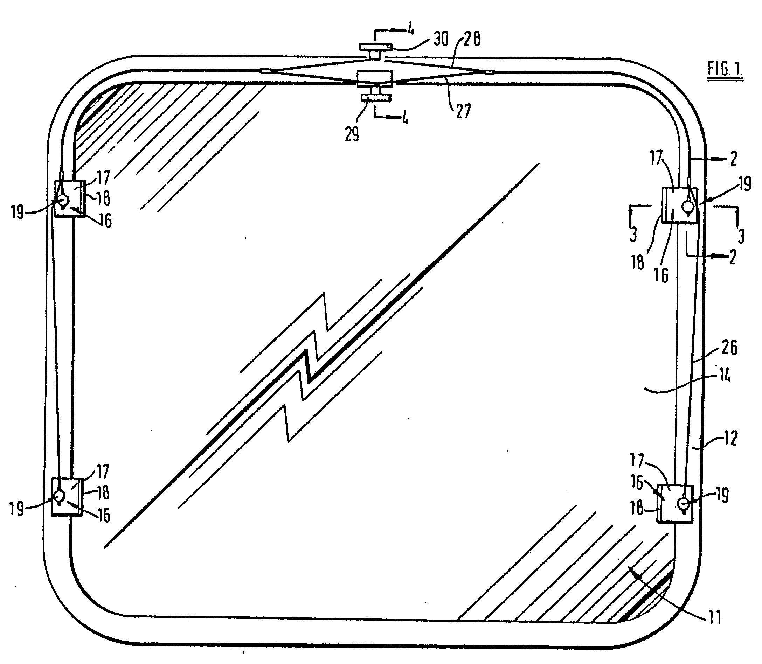

The ventilator or window illustrated in Figures 1 to 4 of the drawings comprises a panel 11 adapted to close an opening in the roof of vehicle, for example a passenger carrying coach. The opening is bounded by a fixed frame (not shown) which is fixed in the roof. The panel comprises an oblong rectangular frame 12 having an inclined inwardly directed continuous lip 13, and a sheet 14 of transparent or translucent plastics material which is held in the frame 12 by means of a sealing strip 15.

The panel 11 is carried from the frame by means of four arm assemblies which are arranged in pairs on opposite sides of the fixed frame. The arm assemblies are so constructed and arranged that the ventilator or window can be opened at either or both sides or ends to bring the panel 11 into oppositely inclined positions or into a position parallel to and spaced from a closed position in which it engages with the fixed frame with the lip 13 overlying and surrounding a water check channel in the fixed frame.

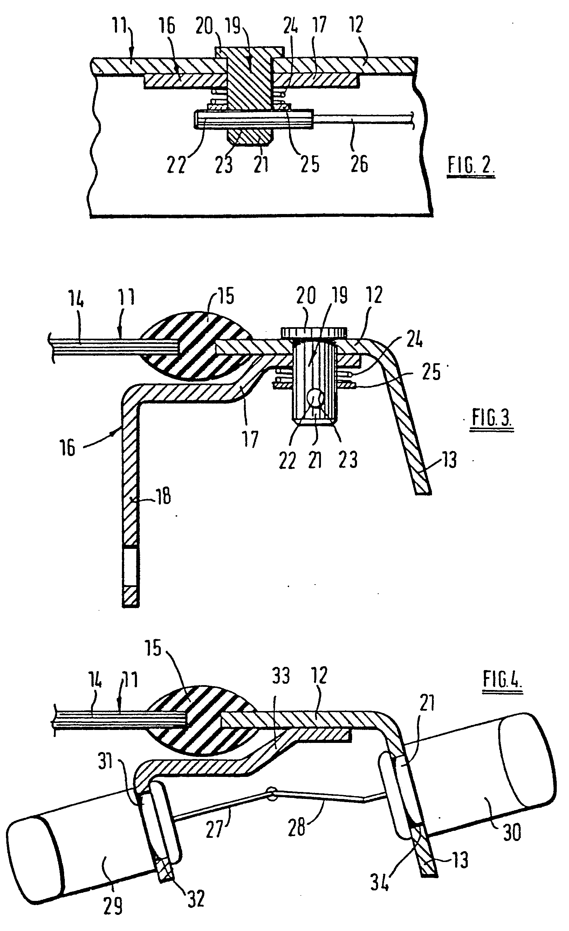

As can best be seen in Figures 2 and 3, each arm assembly is connected to the panel 11 by means of a bracket 16 which comprises a pair of continuous flanges 17 and 18 which are arranged at right angles to each other. The flange 17 is connected to the inner face of the frame 12 of the panel 11 by a stud 19, and the flange 18 projects away from the panel 11 for connection to a respective arm assembly.

Each stud 19 comprises a head 20 on the outside of the frame 12 and a stem 21 projects through superimposed aligned openings in the frame 12 and the flange 17. A pin 22 projecting through a transverse hole 23 in the stem 21 detachably retains the bracket 16 in position. A compression spring 24 is disposed between the flange 17 and a washer 25 which, in turn, acts on the pin 22 to prevent rattle and to bias the pin 22 against the wall of the hole 23, thereby avoiding accidental removal.

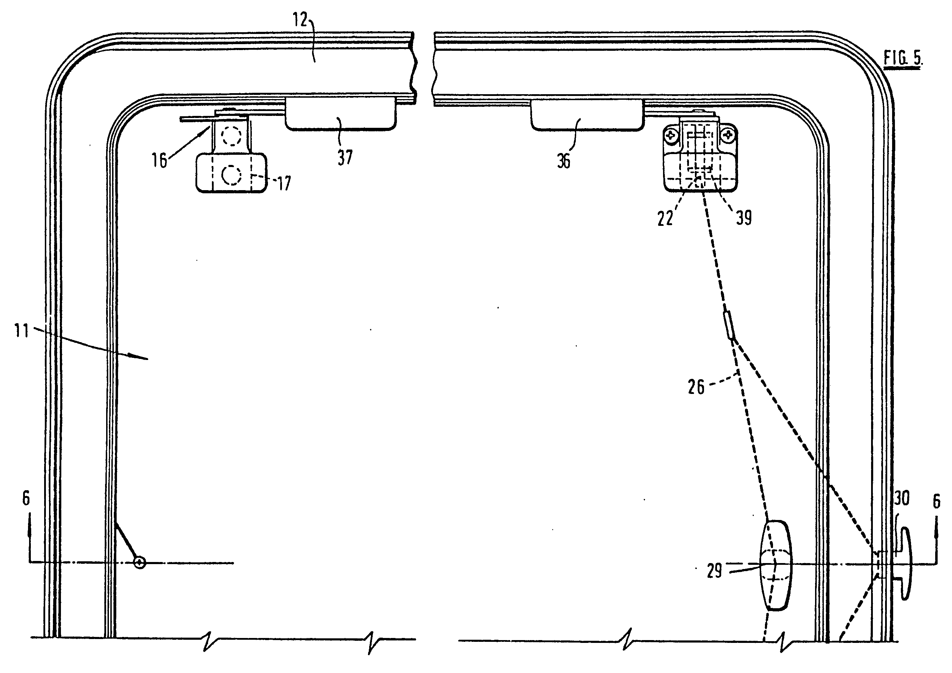

So that all four pins 22 can be withdrawn simultaneously from the openings 23 to permit the panel 11 to be jettisoned from the ventilator or window by disconnecting the flanges 17 from the frame 12, a flexible inextensible member 26, suitably a cable, is trained around the interior of the frame 12, conveniently around rollers (not shown), which are disposed in opposite corners of the frame 12. The cable 26 is connected to the corresponding ends of all four pins 22, which ends all face in the same direction. At an intermediate location along its length, the cable 26 splits into two portions 27 and 28. (Figures 1 and 4) connected in parallel with each other. Each portion 27 and 28 is also connected substantially at the mid-point in its length to a respective manual release member 29, 30. Each release member 29, 30 comprises a handle including a shouldered plug of synthetic plastics material which includes a radial groove 31. The groove 31 in the plug 29 serves detachably to retain the plug 29 in an opening 32 in a mounting plate 33 which extends inwardly from the frame 12 and from which the plug 29 projects inwardly. The groove 31 in the plug 30 serves detachably to retain the plug 30 in an opening 34 in the lip 13 from which the plug 30 projects outwardly. Since both openings are above the level of water check channel in the frame which defines the opening, sealing difficulties are eliminated.

The panel 11 can be removed from the window or ventilator, either from the interior or the exterior of the vehicle, by removing either the plug 29 or the plug 30 from its mounting and then withdrawing the cable 26 through the respective opening 32, 34. This, in turn, withdraws the four pins 22 simultaneously so that the panel 11 can separate from the brackets 16. Each plug 29, 30 preferably incorporates a handle to facilitate manual removal thereof.

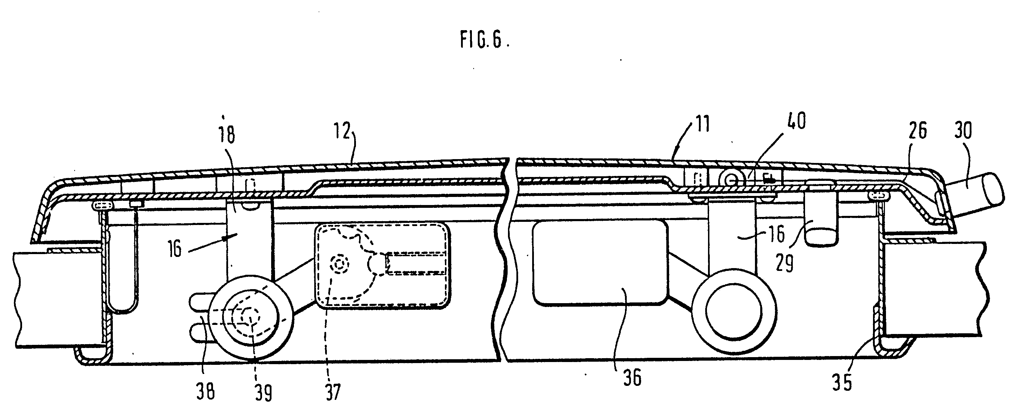

In the modified ventilator or window illustrated in Figures 5 and 6 reference numeral 35 has been applied to the fixed frame surrounding the opening and a pair of front and rear arm assemblies on one side of the frame 35 are designated 36 and 37. Otherwise equivalent parts to those of the ventilator illustrated in Figures 1 to 4 are denoted by the same reference numerals.

The bracket 16 of each rear arm assembly 37 is fixedly secured to the frame 12. The flange 18 of each of those two brackets includes an elongate slot 38 in which a pivotal connection 39 forming part of that arm assembly is pivotally and slidably received. The end of the slot 38 which is remote from the front arm assembly 36 is open so that the bracket 16 of the rear arm assembly can be detached automatically with the panel 11 from the remainder of that arm assembly 37, upon release of the brackets 16 of the front arm assemblies 36.

The brackets 16 of the front arm assemblies 36 are detachably mounted on the frame 12 by a pin withdrawal mechanism similar to that described above with reference to Figure 1 to 4. However, the construction is simplified by arranging for the two pins 22 to be directed towards each other on opposite sides of the opening. This reduces the length of the cable 26. In addition the springs 24 are replaced by blocks 40 of rubber.

Instead of the springs 24 of the ventilator shown in Figure 1 to 4 or the rubber block 40 of the ventilator shown in Figures 5 and 6, resilient means may be disposed between the heads 20 of the studs 19 and the frame 12. With this arrangement, the studs 19 are ejected when the pins 22 are removed. Consequently, the axes of the studs need not be parallel to the direction in which panel 11 separates from the vehicle roof. The resilient means must incorporate sealing means to ensure that the joints between the frame 12 and the heads 20 of the studs 19 are weatherproof.

**Claims**

1. A ventilator or window for a vehicle comprising a panel (11), a frame bounding an opening in the vehicle and manually releasable means for detachably connecting the panel (11) to the frame, respective support means (16) on each side of the frame for supporting the panel (11) on the frame in a closed position and in at least one opened position, each support means (16) including a headed stud (19) adapted to project through respective mutually aligned holes in confronting members (12, 17) associated with the panel (11) and the frame, each stud (19) having a pin (22) projecting through a transverse hole (23) in the stud (19) on the opposite side of the panel (11) and the frame from the head (20) so as to prevent withdrawal of the stud (19), and a flexible inextensible member (26) coupled to the pin (22) so that a force applied to the inextensible member (26) causes the pin (22) to be withdrawn from the stud 19, characterised in that one of the confronting members (12) is fast with the panel (11) and the other confronting member (17) comprises part of the support means (16), the stud (19) and the pin (22) forming a rigid connection between the panel (11) and the member (17), and the longitudinal axis of the studs (19) being substantially parallel with the direction in which the panel (11) is movable away from the frame when the pins (22) are withdrawn.

2. A ventilator or window according to claim 1, characterised in that the panel (11) is supported by opposed pairs of angularly movable arm assemblies (16) and the ventilator or window can be opened at either or both sides or ends to bring the panel into oppositely inclined positions or into a position parallel to and spaced from a closed position.

3. A ventilator or window according to claim 2, characterised in that a respective stud (19) and pin (22) is incorporated in each arm assembly and the four pins are adapted to be withdrawn simultaneously by a common flexible inextensible member (26).

4. A ventilator or window according to claim 2, characterised in that only one arm assembly (16) of each pair incorporates a stud (19) and pin (22) and both pins (22) are adapted to be withdrawn simultaneously by a common flexible inextensible member (26), the other arm assembly of each pair having interengaging co-operating parts (38, 39) which are releasable automatically upon withdrawl of the pin (22) from the said one arm assembly (16) of that pair.

5. A ventilator or window according to any preceding claim, characterised in that the flexible inextensible member (26) is trained around the interior of the panel (11) and is withdrawn by means of a manual release member (29, 30) connected to the inextensible member (26) at an intermediate point on its length.

6. A ventilator or window according to claim 5, characterised in that the manual release member (29, 30) is accessible either from the interior or the exterior of the window or ventilator.

7. A ventilator or window according to claim 5, characterised in that two release members (29, 30) are provided, and the release members are mounted, respectively, on the inside and the outside of the panel (11) and connected at their inner ends to the inextensible member (26).

**Revendications**

1. Battant de ventilation ou fenêtre de véhicule, comprenant un panneau (11), un encadrement délimitant une ouverture dans le véhicule et un moyen déclenchable manuellement pour relier de façon séparable le panneau (11) à l'encadrement, des moyens porteurs (16) prévus respectivement de chaque côté de l'encadrement de façon à supporter le panneau (11) sur l'encadrement dans une position de fermeture et dans au moins une position d'ouverture, chaque moyen porteur (16) comportant un goujon à tête (19) agencé pour dépasser des trous respectifs mutuellement alignés d'éléments (12, 17) placés en regard l'un de l'autre et associés au panneau (11) et à l'encadrement, chaque goujon (19) comportant une groupille (22) dépassant d'un trou transversal (23) du goujon (19) sur le côté du panneau (11) et de l'encadrement qui est opposé à la tête (20) de façon à empêcher un enlèvement du goujon (19), et un organe inextensible flexible (26) relié à la goupille (22) de manière qu'une force appliquée à l'organe inextensible (26) fasse sortir la goupille (22) du goujon (20), caractérisé en ce qu'un des éléments placés en regard (12) est fixé sur le panneau (11) et en ce que l'autre élément (17) comprend une partie du moyen porteur (16), le goujon (19) et la goupille (22) formant une liaison rigide entre le panneau (11) et l'élément (17), et l'axe longitudinal des goujons (19) étant essentiellement parallèle à la direction dans laquelle le panneau (11) peut être écarté de l'encadrement quand les goupilles (22) sont retirées.

2. Battant ou fenêtre selon la revendication 1, caractérisé en ce que le panneau (11) est supporté par des paires opposées d'ensembles de bras (16) mobiles angulairement et en ce que l'aérateur ou fenêtre peut être ouvert à l'un ou l'autre ou bien aux deux côtés ou extrémités pour amener le panneau dans des positions inclinées en sens opposés ou bien dans une position parallèle à et espacée d'une position fermée.

3. Battant ou fenêtre selon la revendication 2, caractérisé en ce qu'une goupille (22) et un goujon (19) respectifs sont incorporés à chaque ensemble de bras et en ce que les quatre goupilles sont agencées pour être retirées simultanément par un organe inextensible flexible commun (26).

4. Battant ou fenêtre selon la revendication 2, caractérisé en ce que seulement un ensemble de bras (16) de chaque paire comporte un goujon (19) et une goupille (22) et en ce que les deux goupilles (22) sont agencées pour être retirées simultanément par un organe inextensible flexible commun (26), l'autre ensemble de bras de chaque paire comportant des parties coopérantes (38, 39) s'accrochant l'une dans l'autre et qui peuvent être libérées automatiquement lors du retrait de la goupille (22) de l'ensemble de bras, cité en premier, de cette paire.

5. Battant ou fenêtre selon l'une des revendications précédentes, caractérisé en ce que l'organe inextensible (26) est entraîné autour de l'intérieur du panneau (11) et est retiré au moyen d'un élément de déclenchement manuel (29, 30) relié à l'organe inextensible flexible (26) en un point intermédiaire de sa longueur.

6. Battant ou fenêtre selon la revendication 5, caractérisé en ce que l'élément de déclenchement manuel (29, 30) est accessible soit de l'intérieur, soit de l'extérieur dudit aérateur ou fenêtre.

7. Battant ou fenêtre selon la revendication 5, caractérisé en ce qu'il est prévu deux éléments de déclenchement (29, 30) et en ce que les éléments de déclenchement sont montés respectivement sur le côté intérieur et sur le côté extérieur du panneau (11) et sont reliés par leurs extrémités intérieures à l'organe inextensible (26).

## Patentansprüche

1. Lüfter oder Fenster für ein Fahrzeug mit einem Flügel (11), einem eine Öffnung im Fahrzeug umgebenden Rahmen und von Hand lösbaren Mitteln zum abnehmbaren Verbinden des Flügels (11) mit dem Rahmen, bestehend aus Halterungen (16) an jeder Seite des Rahmens zum Halten des Flügels (11) am Rahmen in einer geschlossenen Stellung und mindestens einer offenen Stellung, wobei jede Halterung (16) einen mit Kopf versehenen Zapfen (19), der sich durch fluchtende Öffnungen in einander gegenüberstehenden, dem Flügel (11) bzw. dem Rahmen zugeordneten Teilen (12, 17) erstreckt und auf der vom Kopf (20) abgewandten Seite des Flügels (11) und Rahmens einen durch eine Querbohrung (23) des Zapfens (19) gesteckten Stift (22) trägt, sowie ein mit dem Stift (22) gekoppeltes flexibles zugfestes Element (26) aufweist, so daß eine auf das zugfeste Element (26) ausgeübte Kraft das Herausziehen des Stiftes (22) aus dem Zapfen (19) bewirkt dadurch gekennzeichnet, daß eines der sich gegenüberstehenden Teile (12) fest am Flügel (11) angeordnet ist und das andere gegenüberstehende Teil (17) einen Teil der Halterung (16) bildet, wobei Zapfen (19) und Stift (22) eine starre Verbindung zwischen dem Flügel (11) und diesem Teil (17) bilden, und daß die Längsaches der Zapfen (19) im wesentlichen parallel zu der Richtung ist, in der der Flügel (11) bei herausgezogenen Stiften (22) vom Rahmen weg bewegbar ist.

2. Lüfter oder Fenster nach Anspruch 1, dadurch gekennzeichnet, daß der Flügel (11) von einander gegenüberliegenden Paaren von winkelbeweglichen Armgestengen (16) gehalten ist und daß der Lüfter oder das Fenster an jeder einzelnen oder beiden Längs- oder Quersteiten geöffnet werden kann, um den Flügel in entgegengesetzt geneigte Stellungen oder in eine im Abstand paralell zur geschlossenen Stellung liegende Stellung zu bringen.

3. Lüfter oder Fenster nach Anspruch 2, dadurch gekennzeichnet, daß in jedes Armgestänge ein zugehöriger Zapfen (19) und Stift (22) eingefügt ist und daß die vier Stifte gleichzeitig durch ein gemeinsames flexibles Zugelement (26) herausziehbar sind.

4. Lüfter oder Fenster nach Anspruch 2, dadurch gekennzeichnet, daß nur ein Armgestänge (16) jedes Paares einen Zapfen (19) und Stift (22) aufweist, und daß beide Zapfen (22) gleichzeitig durch ein gemeinsames flexibles Zugelement (26) herausziehbar sind, wobei das jeweils andere Armgestänge jedes Paares ineinandergreifende zusammenwirkende Teile (38, 39) aufweist, die automatisch lösbar sind bei herausziehen des Stiftes (22) aus dem einen Armgestänge (16) des jeweiligen Paares.

5. Lüfter oder Fenster nach einem der vorstehenden Ansprüche, dadurch gekennzeichnet, daß das flexible Zugelement (26) um die Innenseite des Flügels (11) herumgeführt und durch ein handbetätigtes Löseelement (29, 30) zurückziehbar ist, welches mit dem Zugelement (26) an einer mittleren Stelle von dessen Länge verbunden ist.

6. Lüfter oder Fenster nach Anspruch 5, dadurch gekennzeichnet, daß das handbetätigte Löseelement (29, 30) entweder von der Innenseite oder von der Außenseite des Fensters oder Lüfters zugänglich ist.

7. Lufter oder Fenster nach Anspruch 5, dadurch gekennzeichnet, daß zwei Löseelemente (29, 30) vorgesehen sind und daß die Löseelemente an der Innenseite bzw. der Außenseite des Flügels (11) angeordnet und an ihren inneren Enden mit dem Zugelement (26) verbunden sind.

FIG.1.

FIG. 2.

FIG. 3.

FIG. 4.

FIG. 5.

FIG.6.

4